# EUROPÄISCHE PATENTSCHRIFT

(11) **EP 4 210 921 B1**
(45) Veröffentlichungstag und Bekanntmachung des Hinweises auf die Patenterteilung: **31.01.2024**
(21) Anmeldenummer: 21773524.0
(22) Anmeldetag: 06.09.2021
(51) Int. Cl.: B29C 33/38, B29C 45/73, B29C 33/02, B29C 33/04, B29C 33/30, B29C 43/52, B29L 31/00

(54) **TEMPERIEREINSATZ FÜR EIN MASCHINEN- ODER WERKZEUGTEIL**
TEMPERATURE-CONTROL INSERT FOR A MACHINE OR TOOL PART
PIÈCE RAPPORTÉE DE THERMORÉGULATION POUR UNE PIÈCE DE MACHINE OU D'OUTIL

(30) Priorität: 07.09.2020 DE 202020105148 U
(43) Veröffentlichungstag der Anmeldung: 19.07.2023
(73) Patentinhaber: Formenbau Althaus GmbH, 57339 Erndtebrück (DE)
(72) Erfinder: RATH, Ingo, 57339 Erndtebrück (DE)
(74) Vertreter: Haverkamp Patentanwälte PartG mbB
(86) Internationale Anmeldenummer: PCT/EP2021/074439
(87) Internationale Veröffentlichungsnummer: WO 2022/049274

(56) Entgegenhaltungen:
- EP-A2- 0 261 523
- WO-A1-2012/133406
- DE-U1-202014 104 871
- DE-U1-202017 101 759
- Unknown: "Der intelligente Technologiemix konturnahe Temperierung", Renishaw GmbH, Listemann Technology AG, 31. Dezember 2018 (2018-12-31), XP055790058, Gefunden im Internet: URL:http://docplayer.org/126156957-Der-int elligente-technologiemix-konturnahe-temper ierung-das-ganze-im-blick.html [gefunden am 2021-03-25]

## Beschreibung

Gegenstand der Erfindung ist ein Maschinen- oder Werkzeugteil, etwa ein Kunststoffurformwerkzeug, mit einem Grundkörper und einen in diesem integrierten, etwa als Werkzeugeinsatz ausgelegten Temperiereinsatz, der eine Temperieroberfläche und Mittel zum Temperieren, insbesondere zum Abkühlen von zumindest einem Teilbereich der Temperieroberfläche aufweist.

Der Stand der Technik wird nachfolgend anhand eines Urformwerkzeuges erläutert. Dieselben Ausführungen gelten gleichermaßen auch für andere Maschinen und Werkzeuge bzw. Maschinen- und Werkzeugteile, bei denen bestimmte Teile gekühlt werden müssen. Bei Urformwerkzeugen handelt es sich beispielsweise um Spritzgusswerkzeuge, wie diese etwa für die Herstellung von Kunststoffprodukten eingesetzt werden. Diese verfügen über zumindest eine Kavität, in der das in dem Spritzgusswerkzeug herzustellende Kunststoffformteil geformt wird. In die Kavität wird bei einem solchen Urformwerkzeug der zuvor plastifizierte Kunststoff mit Druck eingespritzt. Eine solche Kavität ist von zumindest zwei Werkzeugeinsätzen, die jeweils einen Teil der Kavität begrenzen und hierbei somit einen Anteil an der Abformoberfläche ausbilden, eingefasst. Die Werkzeugeinsätze sind wiederum an die Spritzgussmaschine angeschlossen. Zum Öffnen der Kavität und Auswerfen des hergestellten Formteils werden die Werkzeugeinsätze voneinander entfernt.

Die die Kavität einfassende Abformoberfläche der Werkzeugeinsätze stellt das Negativ des in der Kavität urzuformenden Kunststoffteils dar. Dessen äußere Oberfläche bildet nach Abkühlen und Erhärten der in die Kavität eingespritzten plastifizierten Kunststoffmasse das Abbild der Abformoberfläche ab. Der Abformgenauigkeit wird bei vielen Kunststoffprodukten ein hoher Stellenwert zugeordnet. Die Abformgenauigkeit kann jedoch durch Fehler beeinträchtigt sein, wie etwa durch Bindenahtkerben, Glanzunterschiede oder Wolken- und Schlierenbildung. Grund für derartige Oberflächenfehler können ungleichmäßige Abformtemperaturen an der Abformoberfläche der Werkzeugeinsätze sein.

Die Zykluszeiten vom Einspritzen der plastifizierten Kunststoffmasse in die Kavität, wozu auch ein erforderliches Nachspritzen gehören kann, bis zum Erhärten der eingespritzten Masse durch Abkühlen sind kürzer, wenn die die Kavität begrenzenden Werkzeuge gekühlt werden. Zu diesem Zweck sind die Werkzeuge mit Abstand zu ihrer Abformoberfläche von Kühlmittelkanälen durchzogen. Durch diese wird nach Einspritzen der plastifizierten Kunststoffmasse Kühlfluid geleitet, um von der Abformfläche Wärme abzuziehen und den Abkühlprozess und damit die notwendige Zeitdauer, bis ein Auswerfen des urgeformten Kunststoffteils möglich ist, zu verkürzen. Bei dreidimensional geformten Abformoberflächen bereitet es Schwierigkeiten, die Kühlmittelkanäle in einem einheitlichen Abstand zur Abformoberfläche anzuordnen, zumindest wenn die Kühlkanäle durch in den Temperiereinsatz eingebrachte Bohrungen bereitgestellt werden. Besondere Schwierigkeiten bereitet es, die Temperiermittelkanäle in einem dreidimensionalen Verlauf und insbesondere mit geringem Abstand zur Abformfläche bereitzustellen. Werkzeugeinsätze können auch mit generativen Fertigungsmethoden hergestellt werden. Mit derartigen Verfahren können Kühlkanäle innerhalb eines solchen Temperiereinsatzes quasi mit beliebigen Erstreckungen hergestellt werden. Allerdings ist die Herstellung derartiger Temperiereinsätze kostenträchtig. Mitunter verfügen derartige Temperiereinsätze auch nicht über die gewünschte Materialzähigkeit, die für einen solchen Temperiereinsatz gefordert wird. Bei mit generativen Fertigungsmethoden hergestellten Temperiereinsätzen, die typischerweise aus Stahl hergestellt werden, ist auch die Ausbildung einer einheitlichen Abformoberfläche, zumindest wenn diese höheren Qualitätsstandards genügen soll, aufgrund des heterogenen Schweißgefüges nicht unproblematisch.

In DE 20 2017 101 759 U1 ist ein Werkzeugsegment mit einer an seiner der Kavität gegenüberliegenden Seite darin eingebrachten Heizeinsatzaufnahme offenbart. Zu diesem Zweck verfügt das Werkzeugsegment an seiner der Kavität gegenüberliegenden Seite eine entsprechende Aufnahmevertiefung. Der Heizeinsatz kontaktiert mit seiner Wärmekoppelfläche den Boden der Heizeinsatzaufnahme.

WO 2012/133406 A1 beschreibt ein Formwerkzeug zum Harzformen. Das Formwerkzeug ist über seine Erstreckung als Schichtkörper konzipiert. Dieses wird über die gesamte Formoberfläche erwärmt.

Ausgehend von diesem diskutierten Stand der Technik liegt der Erfindung daher die Aufgabe zugrunde, ein Maschinen- oder Werkzeugteil mit einem Temperiereinsatz der eingangs genannten Art dergestalt weiterzubilden, bei dem die Herstellung trotz Vorsehens von oberflächennah angeordneten Temperiermittelkanälen auch mit einem dreidimensionalen Verlauf derselben vereinfacht ist und die vorstehenden Nachteile generativ hergestellter Werkzeugeinsätze als Temperiereinsätze nicht in Kauf genommen werden müssen.

Gelöst wird diese Aufgabe erfindungsgemäß durch ein eingangs genanntes, gattungsgemäßes Maschinen- oder Werkzeugteil mit den Merkmalen des Anspruchs 1 .

Bei diesem Maschinen- oder Werkzeugteil mit seinem Temperiereinsatz erfolgt die Temperierung und damit insbesondere eine Kühlung der Temperieroberfläche und damit der an der Temperieroberfläche anliegenden Kunststoffmasse über einen oder auch mehrere Metalleinsätze. Ein solcher Metalleinsatz umfasst eine seine Temperieroberfläche bereitstellende Metallabdeckung und eine rückseitig daran angeordnete Wärmesenke. Die Wärmesenke wird durch mit geringem Abstand zur Temperieroberfläche der Metallabdeckung angeordnete Temperiermittelkanäle bereitgestellt. Diese befinden sich im Kontaktbereich zwischen der Metallabdeckung und dem rückseitig bezüglich seiner Temperieroberfläche daran angeschlossenen Metallkörper. In geschickter Weise wird die Schnittstelle zwischen der Metallabdeckung und dem Metallkörper genutzt, um dort die Temperiermittelkanäle anzuordnen. Ausgenutzt wird, dass die Temperiermittelkanäle durch zwei Körper begrenzt sind. Dieses erlaubt die Ausbildung der für die Temperiermittelkanäle vorgesehenen Wegsamkeiten durch Einbringen von Nuten in die Rückseite der Metallabdeckung und/oder in die zur Metallabdeckung weisende Frontseite des Metallkörpers. Diese Bearbeitung erfolgt bevor die beiden Teile - Metallabdeckung und Metallkörper - miteinander stoffschlüssig gefügt werden. Dies erlaubt eine Ausbildung der Temperiermittelkanäle, auch dergestalt, dass die Wegsamkeit des oder der Temperiermittelkanäle alleinig in einen der beiden Bauteile beispielweise durch Fräsen eingebracht wird, während das andere Bauteil für diese Nuten zum Ausbilden der Temperiermittelkanäle lediglich als Deckel dient und diesbezüglich keine Bearbeitung erfordert. Auf diese Weise können beispielsweise auf einer dreidimensional geformten Frontseite des Metallkörpers, die seine Kontaktfläche zu der Metallabdeckung darstellt, ein oder mehrere, die Querschnittsfläche der auszubildenden Temperiermittelkanäle bildende Nuten eingebracht werden, die dann von der typischerweise nur wenige Millimeter starken Metallabdeckung, die mit ihrer flächigen Erstreckung der Kontur des Metallkörpers folgt, verschlossen werden. Die Materialstärke der Metallabdeckung braucht über die flächige Erstreckung derselben nicht gleich zu sein. Wenn beispielsweise in einem Teilbereich seiner Temperieroberfläche die Temperierung, typischerweise die Kühlung gegenüber anderen Bereichen etwas verzögert erfolgen soll, kann dieser Teilbereich der Metallabdeckung eine größere Materialstärke aufweisen als der oder die anderen Bereiche. Der Übergang von der einen Materialstärke der Metallabdeckung in die andere kann kontinuierlich oder auch sprunghaft vorgesehen sein. Durch die zumindest zweistückige Ausgestaltung des Metalleinsatzes des Temperiereinsatzes werden somit die Auslegungsmöglichkeiten eines solchen Temperiereinsatzes hinsichtlich einer lokalen unterschiedlichen Kühlung (Temperierung) seiner Temperieroberfläche deutlich erweitert.

Die Wirksamkeit der durch ein oder mehrere, temperieroberflächennah angeordnete Temperierkanäle bereitgestellte Wärmesenke kann dadurch gesteigert werden, dass der Metallkörper des Metalleinsatzes aus einem gegenüber der Metallabdeckung Wärme sehr viel besser leitenden Material hergestellt ist. Bei einer solchen Ausgestaltung ist die Wärmeleitfähigkeit des Metallkörpers vorzugsweise zumindest 5-mal höher als die Wärmeleitfähigkeit der Metallabdeckung und auch des den Metalleinsatz einfassenden Grundkörper des Temperiereinsatzes, in den der zumindest eine Metalleinsatz integriert ist. Bei einer solchen Ausgestaltung stellt auch der Metallkörper eine Wärmesenke dar, und zwar eine passive Wärmesenke. Diese zusätzliche passive Wärmesenke bewirkt, dass mehr Wärme von der Temperieroberfläche und damit aus der Metallabdeckung zum Zwecke einer Kühlung des in der Kavität zu formenden Kunststoffteils abgezogen werden kann als aktiv durch die Temperiermittelkanäle weggeführt werden kann. Diese Kombination aus aktiver und passiver Wärmesenke erlaubt eine Ausgestaltung des Metalleinsatzes, dass bei einem Urformwerkzeugeinsatz, beispielsweise einem Kunststoffurformwerkzeug, die bei einem Zyklus abzuführende Wärme nicht instantan durch das Kühlfluid abgeführt werden muss, sondern in der passiven Wärmesenke zwischengespeichert werden kann, ohne dass diese Wärmepufferung den Wärmeabzug von der Temperieroberfläche nicht nachteilig beeinflusst. Bei diesem Konzept besteht die Möglichkeit, zum Erzielen derselben Kühlleistung die Temperiermittelkanäle kleiner bzw. die Kühlung weniger leistungsfähig auslegen zu müssen. Bei einem solchen Metalleinsatz ist die Kontaktfläche zwischen dem Metallkörper, hergestellt aus einem Werkstoff mit guter Wärmeleitfähigkeit, gegenüber dem Werkstoff der Metallabdeckung sehr viel größer als die Mantelfläche der Temperiermittelkanäle, wodurch die Wärmeabfuhr von der Temperieroberfläche begünstigt ist. Ohne Einbußen, jedenfalls ohne nennenswerte Einbußen hinnehmen zu müssen, braucht der Mantelflächenanteil eines solchen Temperiermittelkanals, der durch die Rückseite der Metallabdeckung gebildet wird, keine besondere Größe aufweisen. Vielmehr ist es ausreichend, wenn die Rückseite der Metallabdeckung die in die Frontseite des Metallkörpers eingebrachten Nuten mit einer bezüglich der Temperiermittelkanäle unstrukturierten Oberfläche verschließt.

Typischerweise ist der Grundkörper aus einem hierfür geeigneten Werkzeugstahl hergestellt. Der Metalleinsatz ist in den Temperiereinsatz integriert und mit dessen Grundkörper stoffschlüssig durch eine Fügeverbindung verbunden. Der zumindest eine Metalleinsatz stellt somit gegenüber dem Grundkörper eine effektive Wärmesenke dar, die auch aus den an den Metalleinsatz grenzenden Bereichen des Grundkörpers Wärme abzieht. Die Fügeverbindung zwischen dem Metalleinsatz und den diesen einfassenden Teilen des Grundkörpers sorgt für eine effektive Wärmeabfuhr von der Temperieroberfläche im Falle eines Kühlens derselben oder auch einer effektiven Wärmezufuhr für den Fall, dass die Temperieroberfläche im Bereich des Metalleinsatzes erwärmt werden soll.

Der Metalleinsatz kann neben dem oder den an der Schnittstelle zwischen seiner Metallabdeckung und seinem Metallkörper vorhandenen Temperiermittelkanälen ebenfalls mit Abstand zu diesen einen oder mehrere weitere Temperiermittelkanäle aufweisen. Diese können durchaus eine andere Querschnittsfläche, insbesondere eine größere Querschnittsfläche aufweisen. Bei einer solchen Auslegung des Metalleinsatzes besteht die Möglichkeit, den oder die Temperiermittelkanäle an der Schnittstelle zwischen der Metallabdeckung und dem Metallkörper durch eine Querbohrung, die die genannten Temperiermittelkanäle mit einem davon mit Abstand im Metallkörper angeordneten Temperiermittelkanal verbindet, an den Kühlmittelkreislauf anzuschließen, an den diese weiteren Temperiermittelkanäle angeschlossen sind.

Durch die Metallabdeckung kann der Metallkörper, wenn dieser aus einem Wärme besonders gut leitenden, typischerweise weniger harten Material, wie beispielsweise einer Kupferlegierung hergestellt ist, gegenüber einer in die Kavität eingebrachten Kunststoffmasse mit abrasiv wirkenden Zusatzstoffen geschützt werden, wie dieses beispielsweise bei Kunststoffen mit einem Glasfaseranteil der Fall ist. Die bei einer solchen Ausgestaltung beispielsweise aus einem Stahlwerkstoff hergestellte Metallabdeckung selbst braucht nur eine geringe Materialstärke aufweisen, beispielsweise 2 bis 4 mm. In einem solchen Fall ist es zweckmäßig, die Metallabdeckung aus demselben Material herzustellen, welches auch für die Einfassung des Metalleinsatzes in dem Grundkörper verwendet wird, also beispielsweise ebenfalls einen Werkzeugstahl. Eine solche Auslegung des Temperiereinsatzes hat den Vorteil, dass die Temperieroberfläche dann materialeinheitlich ausgeführt ist und die Temperieroberfläche aufgrund einer abrasiven Belastung beim Einspritzen der plastifizierten Kunststoffmasse eine einheitliche Abrasionsbeständigkeit aufweist. Überdies kann auf diese Weise eine einheitliche Temperieroberfläche bereitgestellt werden, selbst eine polierte, ohne dass auf der Oberfläche des abgeformten Kunststoffteils zu erkennen wäre, dass hinter einem oder mehreren Teilbereichen der Temperieroberfläche ein solcher, der Temperierung dienender Metalleinsatz angeordnet ist.

Aufgrund der stoffschlüssigen Fügeverbindung zwischen dem Metalleinsatz und dem Grundkörper ist nicht nur eine hohen Beanspruchungen genügende Verbindung und eine Wärmeleitbrücke zwischen diesen Bestandteilen des Temperiereinsatzes bereitgestellt, sondern zudem wird hierdurch zugleich eine Abdichtung in Richtung zur Temperieroberfläche bzw. der Kavität geschaffen. Dieses ist nicht unwesentlich, da, wenn der Temperiereinsatz ganz oder auch nur bereichsweise Temperiermittel durchströmt ist, sichergestellt werden muss, dass eventuell vorhandene Undichtigkeiten nicht dazu führen, dass Kühlfluid in die Kavität eindringt.

Auch die Metallabdeckung ist mit dem Metallkörper zumindest bereichsweise stoffschlüssig verbunden. Der Wärmeübergang von der Metallabdeckung in den Metallkörper erfolgt durch Wärmeleitung und damit mit entsprechend hohem Wärmefluss. Dieses gilt vor allem bei einer Auslegung des Metalleinsatzes, bei dem der Metallkörper aus einem gegenüber der Metallabdeckung sehr viel besser wärmeleitenden Werkstoff, wie etwa einer hierzu geeigneten Kupferlegierung, hergestellt ist. Zudem wird aufgrund der geringeren Härte eines solchen Metallkörpers bei thermisch bedingten Spannungen die Schweißnaht zu der Metallabdeckung und dem Grundkörper gegenüber Spannungen entlastet.

Die Fügeverbindung zwischen dem Metallkörper, beispielsweise aus einer Kupferlegierung hergestellt, und der Metallabdeckung sowie den den Metalleinsatz einfassenden Grundkörper des Temperiereinsatzes, typischerweise aus einem Werkzeugstahl hergestellt, wird gemäß einem bevorzugten Ausführungsbeispiel durch Elektronenstahlschweißen hergestellt. Von besonderem Vorteil einer Elektronenstrahlschweißverbindung zwischen den genannten Bestandteilen des Temperiereinsatzes sind seine große Eindringtiefe zwischen die aneinandergrenzenden Kontaktflächen der Fügepartner und die Ausbildung einer Schweißnaht mit nur geringer Breite. Zudem kann durch die Steuerung des Elektronenstrahls die Zusammensetzung des Schweißgefüges gesteuert werden, wenn diese aus unterschiedlichen Werkstoffen bestehen. Durch ersteres ist gewährleistet, dass die miteinander zu fügenden Teile über eine relativ große Tiefe stoffschlüssig durch die erhärtete Schmelze (Schweißnaht) miteinander verbunden sind und somit ein großflächiger Wärmeübergang durch Wärmeleitung von dem einen Metallteil in das andere Metallteil erfolgt. Die geringe Breite der Schweißnaht sorgt dafür, dass die Wärmeeinflusszone in den jeweiligen Fügepartner gering ist und daher zuvor eingestellten Eigenschaften, wie etwa die Härte in dem Grundkörper nur in einem sehr schmalen, an die Schweißnaht grenzenden Randbereich möglicherweise verändert wurden. Daher kann die Schweißung an bereits gehärteten Bauteilen - dem Grundkörper und der Metallabdeckung - vorgenommen werden. Die geringe Breite der Schweißnaht beim Elektronenstrahlschweißen ist auch für die Belastbarkeit des Temperiereinsatzes, insbesondere seine thermische Belastbarkeit mit den miteinander gefügten Metallteilen auch mit unterschiedlichem Wärmeausdehnungskoeffizienten günstig. Durch das Elektronenstrahlschwei-ßen lässt sich bei werkstoffunterschiedlichen Fügepartnern die Qualität der Schweißnaht auch durch den gewünschten Anteil des von dem jeweiligen Fügepartner aufgeschmolzenen Materials beeinflussen, und zwar dahingehend, ob dieser zu gleichen Anteilen in jeden einzelnen Fügepartner gelenkt wird oder mit einem größeren Anteil in einen der beiden Fügepartner. Bei einer Werkzeugstahl-Kupferlegierung-Materialpaarung kann beispielsweise die Qualität der Schweißnaht dadurch verbessert, wenn durch Ausrichtung des Elektronenstrahles der Anteil der aufgeschmolzenen Kupferlegierungsphase in der Schweißschmelze etwas höher ist. Ausgenutzt wird bei einer solchen Zusammensetzung der Schweiße die bereits bei höherer Temperatur stattfindende Erstarrung des aufgeschmolzenen Stahlanteils, was aufgrund von sich aufbauenden Eigenspannungen mitunter zu einer Ausbildung von Mikrorissen führen kann.

Zum Herstellen des Temperiereinsatzes wird man in einem ersten Schritt die Metallabdeckung mit ihrer zu dem Metallkörper weisenden Rückseite mit der zu der Metallabdeckung weisenden Kontaktfläche des Metallkörpers vorzugsweise ebenfalls durch Elektronenschweißen stoffschlüssig verbinden. Auch an dieser Stelle stellen sich dieselben Vorteile ein, die zuvor bei der Fügeverbindung durch Elektronenstrahlschweißen zwischen dem seitlichen Rand des Metalleinsatzes und dem diesen einfassenden Metallmaterial des Grundkörpers des Temperiereinsatzes beschrieben sind. Die Tiefe der Schweißnaht, die durchaus 20 bis 25 mm oder mehr betragen kann, sorgt für eine großflächige stoffschlüssige Verbindung und somit für einen besonders leistungsfähigen Wärmeübergang im Falle eines Kühlens von der Metallabdeckung in den Metallkörper, der, wenn aus einem gegenüber der Metallabdeckung besser wärmeleitenden Werkstoff hergestellt, zugleich eine passive Wärmesenke bildet. Ist die Metallabdeckung mit dem Metalleinsatz in der beschriebenen Weise in einem ersten Schritt der Herstellung des Temperiereinsatzes verbunden, wird in einem zweiten Fügeschritt der Metalleinsatz mit seinen seitlichen Abschlüssen in eine entsprechende Metalleinsatzausnehmung des Grundkörpers eingesetzt und in der beschriebenen Weise elektronenstrahlverschweißt. Diese Schweißverbindung sorgt neben den vorbeschriebenen positiven Eigenschaften auch für die gewünschte Dichtigkeit zur Temperieroberfläche und damit zur Kavität hin. In einer Ausführung der Herstellung eines solchen Temperiereinsatzes ist vorgesehen, dass der Grundkörper vor Einsetzen des Metalleinsatzes vorerwärmt wird, sodass dieser nach dem Abkühlen nach dem Elektronenstrahlschweißen auf den Metalleinsatz aufschrumpft, wodurch die mechanische Belastbarkeit und auch der Wärmeübergang zwischen dem Grundkörper und dem Metalleinsatz verbessert ist. Zugleich wird hierdurch die Qualität der Schweißnaht nochmals verbessert.

Besonders gute Fügeverbindungsergebnisse konnten bei einer Werkstoffpaarung ermittelt werden, bei der als Werkzeugstahl eine der Stahlsorten 1.2343, 1.2083 oder 1.2738 ist und das Material des Metalleinsatzes als weiterer Partner dieser Paarung eine CuCoNi- oder eine CuNiCrSi-Legierung verwendet wird. Durchaus möglich ist auch eine Stahl-Stahl-Paarung. Dann wird für das Material des Metalleinsatzes eine Stahllegierung mit besonders guter Wärmeleitfähigkeit eingesetzt.

Es kann vorteilhaft sein, nach dem Schweißvorgang den Temperiereinsatz einer Wärmebehandlung zum Beseitigen von im Zuge der Fügeverfahren eingebrachten Eigenspannungen zu unterwerfen. Eine solche Wärmebehandlung wird typischerweise bei Temperaturen zwischen 240° und 280° C für eine bis drei Stunden durchgeführt. Die maximale Temperatur der Wärmenachbehandlung wird durch den Härtezustand des Werkzeugstahles bestimmt. Der Härtezustand des Werkzeugstahls des Grundkörpers und auch der Metallabdeckung, wenn aus einem gehärteten Stahl hergestellt, sollen durch die Wärmenachbehandlung nicht beeinträchtigt werden. Wie bereits vorstehend angesprochen, wird dieser gehärtete Zustand auch durch die nur sehr geringe Wärmeeinflusszone beim Elektronenstrahlschweißen nicht beeinflusst. Sind bei dem Temperiereinsatz sowohl die Metallabdeckung als auch der Metallkörper aus Stahl hergestellt, kann der Temperiereinsatz auch nach dem Schweißvorgang gehärtet werden. Ist hingegen der Metallkörper aus einem anderen Metall, etwa einer Kupferlegierung hergestellt, bei welchem Material sich die gewünschten Eigenschaften bereits bei sehr viel tieferen Temperaturen als bei Stahl einstellen, ist ein Härten zum Härten der Stahlbestandteile des Temperiereinsatzes nicht möglich, jedenfalls nicht ohne die zuvor eingestellten Eigenschaften des Metallkörpers nachteilig zu beeinflussen.

Nachfolgend ist die Erfindung anhand von Ausführungsbeispielen unter Bezugnahme auf die beigefügten Figuren beschrieben. Es zeigen:
- **Fig. 1:**: Eine schematisierte Querschnittsdarstellung eines Ausschnittes aus einem Werkzeugeinsatz eines Kunststoffurformwerkzeuges in einem Zwischenschritt bei der Herstellung, bevor die Abformoberfläche des Werkzeugeinsatzes in seine Endkontur gebracht worden ist,
- **Fig. 2:**: der Werkzeugeinsatz der Figur 1 mit der in seine Endkontur gebrachten Abformoberfläche,
- **Fig. 3:**: einen schematisierten Querschnitt durch einen Ausschnitt eines weiteren Werkzeugeinsatzes,
- **Fig. 4:**: einen schematisierten Querschnitt durch noch einen weiteren Werkzeugeinsatz und
- **Fig. 5:**: einen schematisierten Querschnitt durch noch einen weiteren Werkzeugeinsatz.

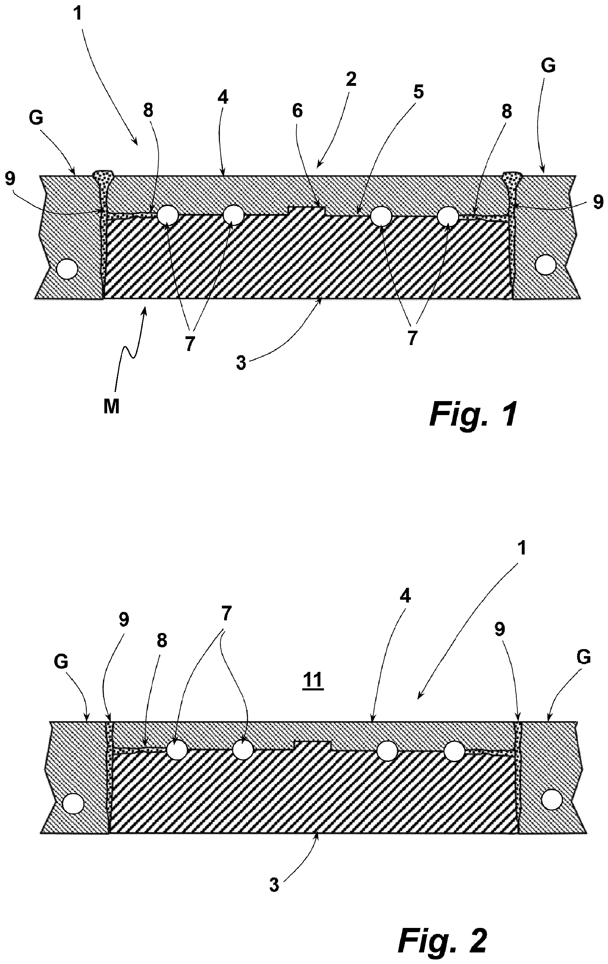

Ein als Temperiereinsatz vorgesehener Werkzeugeinsatz 1 ist Teil eines in den Figuren nicht näher dargestellten, als Spritzgusswerkzeug ausgelegten Kunststoffurformwerkzeuges. Der Werkzeugeinsatz 1 ist in Figur 1 in einem Zustand gezeigt, in dem seine Abformoberfläche, mit der der Werkzeugeinsatz 1 die Kavität begrenzt, noch nicht in ihre Endkontur gebracht ist. Die Abformoberfläche wird an der mit dem Bezugszeichen 2 bezeichneten Seite des Werkzeugeinsatzes 1 erstellt.

Das Besondere bei dem Werkzeugeinsatz 1 ist, dass dieser zur besonderen Kühlung eines Teils seiner Abformoberfläche einen in diesen integrierten Metalleinsatz M aufweist. Der Metalleinsatz M umfasst bei dem dargestellten Ausführungsbeispiel einen Metallkörper 3 und eine Metallabdeckung 4. Bei diesem Ausführungsbeispiel ist der Metallkörper 3 aus einer CuCo1 Ni1-Legierung hergestellt. Diese Kupferlegierung weist eine Wärmeleitfähigkeit von 230 bis 250 W/mK auf. Der Metalleinsatz M ist eingebettet in den diesen einfassenden Werkzeugstahl des Grundkörpers G des Werkzeugeinsatzes 1. Bei dem dargestellten Ausführungsbeispiel ist als Werkzeugstahl die Stahlsorte 1.2343 verwendet worden. Dieser weist eine Wärmeleitfähigkeit von etwa 25 W/mK auf. Der Metalleinsatz M ist in der Ebene des Werkzeugeinsatzes 1 beidseitig von dem Werkzeugstahl des Grundkörpers G eingefasst. Dieses trifft auch für die aufgrund der Schnittdarstellung nicht erkennbaren Stirnseiten des Metalleinsatzes M zu. Die Metallabdeckung 4 ist bei diesem Ausführungsbeispiel wie der Grundkörper G aus dem Werkzeugstahl der Sorte 1.2343 hergestellt. Der Metallkörper 3 grenzt mit seiner zu der Metallabdeckung 4 weisenden Kontaktfläche 5 an die Rückseite der Metallabdeckung 4. Zum Zwecke einer Zentrierung ist an der Seite der Kontaktfläche 5 des Metallkörpers 3 ein Zentriervorsprung 6 ausgebildet, der in eine komplementäre Aufnahme, eingebracht in die Rückseite der Metallabdeckung 4, eingreift. Hierdurch sind beide Teile - der Metallkörper 3 und die Metallabdeckung 4 - formschlüssig, in Richtung parallel zur Abformoberfläche miteinander in Eingriff gestellt.

Die Wärmeleitfähigkeit des Werkzeugstahls der Metallabdeckung 4 beträgt etwa 25 W/mK. Damit ist die Wärmeleitfähigkeit des Metallkörpers 3 mehr als 8-mal so hoch wie diejenige des bei diesem Ausführungsbeispiel eingesetzten Werkzeugstahls. Damit stellt der Metallkörper 3 eine effektive Wärmesenke dar, durch die Wärme von der Abformoberfläche abgeführt wird.

An der Schnittstelle bzw. dem Kontaktbereich zwischen der Rückseite der Metallabdeckung 4 und der zu der Metallabdeckung 4 weisenden Seite des Metallkörpers 3 sind Temperiermittelkanäle 7 vorgesehen. Zum Bereitstellen der Temperiermittelkanäle 7 ist bei diesem Ausführungsbeispiel jeweils in die Rückseite der Metallabdeckung 4 und der Frontseite des Metallkörpers 3 eine sich in der Zusammenstellung der beiden Bauteile zu jeweils einem Temperiermittelkanal 7 ergänzende Halbnut eingebracht. Wenn die beiden Teile - der Metallkörper 3 und die Metallabdeckung 4 - bestimmungsgemäß zueinander angeordnet sind, ergänzen sich diese Nuten und bilden die in Figur 1 und 2 gezeigten Temperiermittelkanäle 7 aus. Auf diese Weise können Temperiermittelkanäle 7 auch mit dreidimensionalem Verkauf ohne weiteres hergestellt werden, vor allem auch ohne dass hierzu generative Fertigungsverfahren bemüht werden müssten.

Die Metallabdeckung 4 ist mit dem Metallkörper 3 durch Fügen stoffschlüssig verbunden. Die stoffschlüssige Verbindung wurde durch Elektronenstrahlschweißen erstellt, wobei in einem ersten Fügeschritt der Elektronenstrahl seitlich in die aneinander anliegenden Kontaktflächen von Metallabdeckung 4 und Metallkörper 3 gerichtet worden ist. Diese bis an den außenliegenden Temperiermittelkanal 7 reichende Schweißnaht ist in Figur 1 mit dem Bezugszeichen 8 kenntlich gemacht. Zum Herstellen dieser Fügeverbindung wurde der Elektronenstrahl seitlich über den gesamten Umfang um die Zusammenstellung aus Metallabdeckung 4 und Metallkörper 3 herum geführt. Auf diese Weise ist eine großflächige stoffschlüssige Verbindung zwischen der Metallabdeckung 4 und dem Metallkörper 3 bereitgestellt. In einem zweiten Fügeschritt sind die Seitenflächen dieser gefügten, den Metalleinsatz M bildenden Teile 3, 4 für die vorgesehene Integration in den Grundkörper G bearbeitet worden, sodass diese in eine entsprechende Freilassung des Grundkörpers G des Werkzeugeinsatzes 1 einpassen. Anschließend ist der darin eingesetzte Metalleinsatz M umlaufend mit dem Werkzeugstahl des Grundkörpers G in gleicher Weise verschweißt worden, wie dieses zu dem Elektronenstrahlschweißen von Metallabdeckung 4 und Metallkörper 3 beschrieben ist. Die auf diese Weise erstellte Schweißnaht ist mit dem Bezugszeichen 9 kenntlich gemacht. In Figur 1 ist deutlich erkennbar, dass die Schweißnähte 8, 9 infolge des Elektronenstrahlschwei-ßens sehr tief in das Material eingreifen, bei dem dargestellten Ausführungsbeispiel etwa 20 bis 25 mm. Die Breite der Schweißnähte beträgt weniger als 2 mm, beispielsweise 0,5 bis 1,0 mm. Die Wärmeeinflusszone kann mit etwa 1 bis 2 mm angegeben werden. Grund für die geringe Tiefe der Wärmeeinflusszone ist auch die nur kurzzeitige Bestrahlung der Fügepartner mit dem Elektronenstrahl. Die Schweißnähte 8, 9 sind durch entsprechende Steuerung des Elektronenstrahls ausgeführt, dass darin der Anteil der aufgeschmolzenen Kupferlegierung etwas höher ist als der Anteil des aufgeschmolzenen Werkzeugstahls.

In einem nachfolgenden Schritt wird die Seite 2 des Werkzeugeinsatzes 1 der Figur 1 spanend bearbeitet und bei dem dargestellten Ausführungsbeispiel poliert, um die bei diesem Ausführungsbeispiel als Abformoberfläche 10 dienende Temperieroberfläche (siehe Figur 2) bereitzustellen. Die Abformoberfläche 10 begrenzt die Kavität 11 des im Übrigen nicht näher dargestellten Spritzgusswerkzeuges. Bei diesem Ausführungsbeispiel ist die Abformoberfläche 10 über ihre gesamte Erstreckung infolge der Verblendung des Metalleinkörpers 3 durch die Metallabdeckung 4 materialeinheitlich ausgeführt, so dass das Verschleißverhalten an der Abformoberfläche 10 einheitlich ist und im Übrigen eine völlig homogene Abformoberfläche 10 bereitgestellt ist. Die Dicke der Metallabdeckung 4 zwischen der Abformoberfläche 10 und dem Metallkörper 3 beträgt bei dem dargestellten Ausführungsbeispiel etwa 4 bis 4,5 mm. Die Materialstärke der Metallabdeckung kann auch geringer sein, beispielsweise 2 bis 2,5 mm. Eine gewisse Materialstärke wird jedoch als zweckmäßig angesehen, da über diese eine Temperaturgleichverteilung über die Abformoberfläche 10 erfolgt. Die Materialstärke kann durchaus auch 8 bis 10 mm betragen, sodass der oder die Temperiermittelkanäle immer noch oberflächennah angeordnet sind. Die geringe Materialstärke der Metallabdeckung 5 sorgt dafür, dass dieser Bereich der Abformoberfläche 10 und ebenso die angrenzenden Bereiche der Abformoberfläche 10, bei der diese durch den Werkzeugstahl des Grundkörpers G bereitgestellt ist aufgrund der geringen Entfernung rasch mit hoher Wärmemenge in den als Wärmesenke dienenden Metalleinsatz M abgeführt wird. Dabei wird die Wärmesenke zum einen durch den Metallkörper 3 und zum anderen durch die fluiddurchströmten Temperierkanäle 7 bereitgestellt. Dieses rasche Abkühlen der Abformoberfläche 10 erlaubt eine Reduktion der Zykluszeit verglichen mit einem Werkzeugeinsatz ohne einen solchen Metalleinsatz um mehr als 40 %.

Bei einer solchen Auslegung des Werkzeugeinsatzes 1 stellt die umlaufende Schweißverbindung 9 mit dem einfassenden Werkzeugstahl des Grundkörpers G zugleich eine wirksame Dichtung bereit, sodass nicht die Gefahr besteht, dass aufgrund möglicher Leckagen innerhalb der Temperiermittelkanäle 7 oder ihrer Anschlüsse Temperierfluid in die Kavität 11 gelangen kann. Genutzt wird diese Abdichtung gegenüber der Kavität 11 insofern, dass zwischen der Rückseite der Metallabdeckung 4 und der zu der Metallabdeckung 4 weisenden Kontaktfläche 5 des Metallkörpers 3 in den nicht von der Schweißnaht 8 beeinflussten Bereichen keine zusätzlichen Dichtungsmaßnahmen erforderlich sind. Selbst eine geringe Leckage zwischen den Temperiermittelkanälen 7, sollte diese überhaupt eintreten, beeinträchtigt die Verwendung des Werkzeugeinsatzes 1 nicht. Aufgrund des für die Metallabdeckung 4 vorgesehenen Materials und seiner Auslegung ist eine stoffschlüssige Verbindung auch im Bereich des inneren Temperiermittelkanals 7 nicht vor dem Hintergrund erforderlich, dass durch den in den Temperiermittelkanälen 7 herrschenden Druck die Abdeckung 4 von dem Metallkörper 3 weggedrückt werden könnte.

Die Temperiermittelkanäle 7 des Werkzeugeinsatzes 1 sind in nicht näher dargestellter Art und Weise an einen Temperiermittelkreislauf angeschlossen.

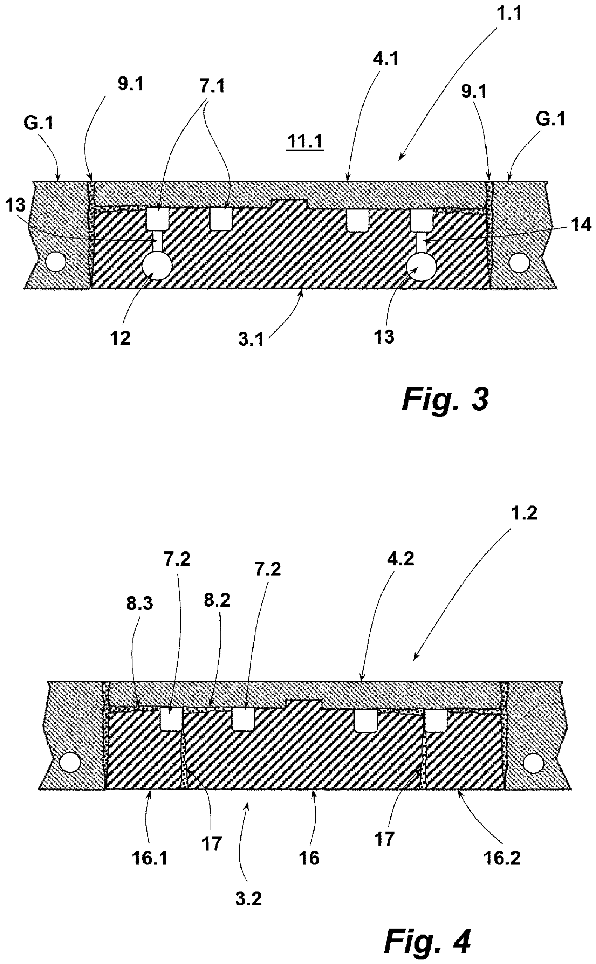

Figur 3 zeigt ein weiteres Ausführungsbeispiel eines Werkzeugeinsatzes 1.1. Dieser ist prinzipiell genauso aufgebaut wie der Werkzeugeinsatz 1 der vorbeschriebenen Figuren. Daher gelten diese Ausführungen gleicherma-ßen für den Werkzeugeinsatz 1.1. Gleiche Bauteile sind mit denselben Bezugszeichen, ergänzt um den Suffix ".1" kenntlich gemacht. Der Werkzeugeinsatz 1.1 unterscheidet sich von dem Werkzeugeinsatz 1 durch die Ausbildung seiner Temperiermittelkanäle 7.1. Zur Ausbildung der Temperiermittelkanäle 7.1 ist nur die zu der Metallabdeckung 4.1 weisende Seite des Metallkörpers 3.1 entsprechend bearbeitet worden, beispielsweise durch eine Fräsbearbeitung. Die Metallabdeckung 4.1 dient lediglich als Verschluss der in den Metallkörper 4.1 eingebrachten Nuten. Durch diese ist der Verlauf des Temperierfluides vorgegeben.

Bei dem Werkzeugeinsatz 1.1 sind die im Bereich der Schnittstelle zwischen der Metallabdeckung 4.1 und dem Metallkörper 3.1 angeordneten Temperiermittelkanäle 7.1 an einen ebenfalls in dem Metallkörper 3.1 angeordneten Zulaufkanal 12 und einen Rücklaufkanal 13 angeschlossen. Der Anschluss erfolgt über jeweils eine Querbohrung 14, 15. Der Zulaufkanal 12 und der Rücklaufkanal 13 erstrecken sich nur bis in den vorgesehenen Anschlussbereich und sind mit Abstand zu der Kontaktfläche 5.1 angeordnet. Der Zulaufkanal 12 und der Rücklaufkanal 13 sind an einen im Übrigen nicht näher dargestellten Temperiermittelkreislauf angeschlossen.

Die Anordnung der Temperiermittelkanäle 7, 7.1 bei den Werkzeugeinsätzen 1, 1.1 ist mit geringem Abstand zur jeweiligen Abformoberfläche 10, 10.1 vorgesehen, wodurch eine besonders effiziente Wärmeabfuhr gegeben ist.

Um unter Umständen im Zuge der Schweißtätigkeit in den Werkzeugeinsatz eingebrachte Eigenspannungen zu reduzieren, sind diese in ihrem in Figur 1 gezeigten Zustand entspannungsgeglüht worden, und zwar bei 260° C für zwei Stunden. Bei dieser Temperatur werden die Eigenschaften des aus der genannten Kupferlegierung hergestellten Metallkörpers 3 nicht nachteilig beeinflusst.

Figur 4 zeigt ein weiteres Ausführungsbeispiel eines Werkzeugeinsatzes 1.2. Der Werkzeugeinsatz 1.2 ist grundsätzlich aufgebaut wie die zuvor beschriebenen Werkzeugeinsätze 1 und 1.1. Von diesen unterscheidet sich der Werkzeugeinsatz 1.2 dadurch, dass sein Metallkörper 3.2 aus mehreren Metallkörperteilen 16, 16.1, 16.2 zusammengesetzt ist. Die Teilung des Metallkörpers 3.2 ist vorgenommen worden, um die stoffschlüssige Kontaktfläche zwischen dem Metallkörper 3.2 und der Metallabdeckung 4.2 über eine größere Fläche zu erzielen. Zu diesem Zweck ist zunächst der zentral angeordnete Metallkörperteil 16 mit der Rückseite der Metallabdeckung 4.2 umfänglich bis zu dem innenliegenden Temperiermittelkanal 7.2 verschweißt worden. Diese Schweißnaht ist mit dem Bezugszeichen 8.2 in Figur 4 kenntlich gemacht. Nach einer anschließenden Seitenbearbeitung des Metallkörperteils 16 sind die seitlichen Metallkörperteile 16.1, 16.2 mit dem Metallkörperteil 16 und mit der Metallabdeckung 4.2 elektronenstrahlverschweißt worden. Die Schweißnähte, mit denen die Metallkörperteile 16.1, 16.2 mit der Metallabdeckung 4.2 stoffschlüssig gefügt sind, tragen das Bezugszeichen 8.3. Die Schweißnähte zum Verbinden der Metallkörperteile 16, 16.1, 16.2 untereinander sind mit dem Bezugszeichen 17 kenntlich gemacht. Eine solche Teilung ist bei dem in Figur 4 gezeigten Ausführungsbeispiel vorgenommen worden, um die Länge der an die Rückseite der Metallabdeckung 4.2 grenzenden Schweißnaht und damit die stoffschlüssige Verbindungsfläche zu vergrößern und dadurch den Wärmetransport aus der Metallabdeckung 4.2 in den Metallkörper 3.2 zu verbessern. Insofern soll dieses Ausführungsbeispiel zeigen, dass der Metallkörper eines solchen Werkzeugeinsatzes durchaus auch modular aufgebaut sein kann.

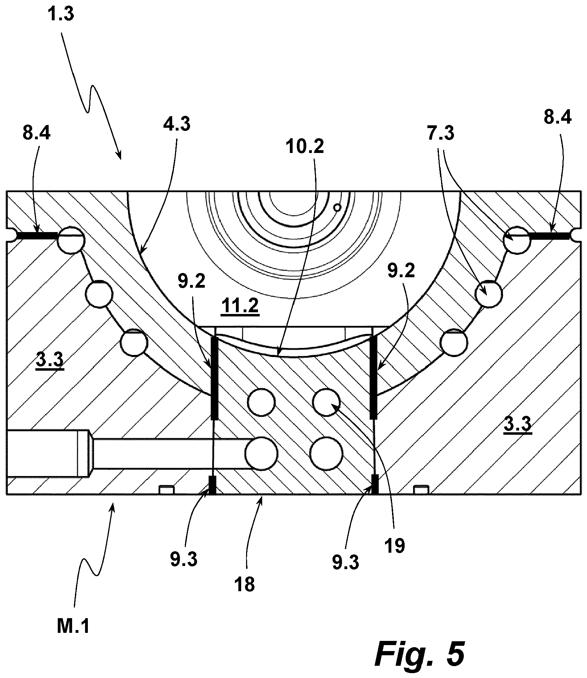

Figur 5 zeigt noch ein weiteres Ausführungsbeispiel eines als Temperiereinsatz ausgelegten Werkzeugeinsatzes 1.3 für ein Kunststoffurformwerkzeug. Der Werkzeugeinsatz 1.3 ist in dieser Figur ohne den sich in horizontaler Richtung daran anschließenden Grundkörper gezeigt. Der Werkzeugeinsatz 1.3 ist prinzipiell aufgebaut wie die zuvor beschriebenen Ausführungsbeispiele. Von diesen unterscheidet sich der Werkzeugeinsatz 1.3 dadurch, dass in den Metalleinsatz, bereitgestellt durch den Metallkörper 3.3 mit der Metallabdeckung 4.3, in einem Teilbereich der Abformoberfläche 10.2 ein weiterer Metalleinsatz 18 eingesetzt ist. Eine solche Ausgestaltung ist sinnvoll, wenn in dem Bereich des Metalleinsatzes 18 der Abformoberfläche 10.2 eine andere Temperierung erfolgen soll als in den angrenzenden Bereichen der Metallabdeckung 4.3. Bei dem dargestellten Ausführungsbeispiel wird durch den Metalleinsatz 18 mit seinen zusätzlichen Temperiermittelkanälen 14 der durch den Metalleinsatz 18 bereitgestellte Anteil der Abformoberfläche 10.2 eine stärkere Kühlung erfahren.

Im Übrigen sind bei diesem Ausführungsbeispiel gleiche Teile wie bei dem vorangegangenen Ausführungsbeispiel mit denselben Bezugszeichen kenntlich gemacht, ergänzt um den gegenüber dem vorangegangenen Ausführungsbeispiel um einen Suffix mit einem um 1 höheren Zähler.

Die Schweißnähte, die in derselben Weise erstellt werden, wie dieses zu den vorangegangenen Ausführungsbeispielen beschrieben sind, sind bezüglich der Schnittstelle zwischen Metallabdeckung 4.3 und Metallkörper 3.3 mit dem Bezugszeichen 8.4 und diejenigen zwischen dem Metalleinsatz 18 und der Metallabdeckung 4.3 bzw. dem Grundkörper 3.3 mit dem Bezugszeichen 9.2 kenntlich gemacht. Der Metalleinsatz 18 ist zur Gewährleistung einer Abdichtung gegenüber den darin eingebrachten Temperiermittelkanälen 19 zudem rückseitig in derselben Weise mit dem Metallkörper 3.3 verschweißt. Die diesbezüglichen Schweißnähte sind mit dem Bezugszeichen 9.3 kenntlich gemacht. Die Eindringtiefe dieser Schweißnähte 9.3 ist bei diesem Ausführungsbeispiel geringer als diejenige der Schweißnähte 9.2

In einem in den Figuren nicht dargestellten Ausführungsbeispiel sind die Metallabdeckung und der Metallkörper aus Werkzeugstahl gefertigt. Aufgrund der Temperiermittelkanäle, integriert in den Metalleinsatz, wirkt auch dieser als Wärmesenke zum Abführen von Wärme von der Abformoberfläche. Auch bei dieser Ausgestaltung sind die Fügepartner durch Elektronenstrahlschweißen miteinander verbunden.

Die Erfindung ist anhand von schematisierten, geometrisch sehr einfachen Ausführungsbeispielen beschrieben worden. Mit dem vorbeschriebenen Konzept können selbstverständlich auch Werkzeugeinsätze mit einer dreidimensional geformten Abformoberfläche hergestellt werden, wobei der zumindest eine Metalleinsatz auch hinter einer Metallabdeckung angeordnet sein kann.

Möglich ist es auch, einen solchen Werkzeugeinsatz dergestalt bezüglich seines zumindest einen Metalleinsatzes auszulegen, dass ein Teil des Werkzeugeinsatzes einen Bereich der Abformoberfläche bildet, während andere Bereiche durch eine Metallabdeckung verblendet sind. Auch auf diese Weise lässt sich ein unterschiedliches Temperierverhalten an der Abformoberfläche erzeugen.

Ein Werkzeugeinsatz, der wie vorstehend beschrieben für ein Kunststoffurformwerkzeug vorgesehen ist, kann mit denselben Vorteilen auch für die Urformung von anderen Materialien, insbesondere Metallen etwa zur Verwendung in einem Druckgusswerkzeug eingesetzt werden.

Die vorstehend anhand von Kunststoffurformwerkzeugen beschriebenen Vorteile ergeben sich in analoger Weise, wenn der Temperiereinsatz Teil einer Maschine oder Werkzeuges bzw. eines Maschinen- oder Werkzeugteils ist, wenn eine Kühlung benötigt wird.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen näher dargelegt werden müsste.

### Bezugszeichenliste

- 1, 1.1, 1.2, 1.3: Werkzeugeinsatz
- 2: Seite
- 3, 3.1, 3.2, 3.3: Metallkörper
- 4, 4.1, 4.2, 4.3: Metallabdeckung
- 5, 5.1: Kontaktfläche
- 6: Zentriervorsprung
- 7, 7.1, 7.2, 7.3: Temperiermittelkanal
- 8, 8.1, 8.2, 8.3, 8.4: Schweißnaht
- 9, 9.1, 9.2, 9.3: Schweißnaht
- 10, 10.1, 10.2: Abformoberfläche
- 11, 11.1, 11.2: Kavität
- 12: Zulaufkanal
- 13: Rücklaufkanal
- 14: Querbohrung
- 15: Querbohrung
- 16, 16.1, 16.2: Metallkörperteil
- 17: Schweißnaht
- 18: Metalleinsatz
- 19: Temperiermittelkanal

- G, G.1: Grundkörper
- M, M.1: Metalleinsatz

## Patentansprüche

1. Maschinen- oder Werkzeugteil, etwa ein Kunststoffurformwerkzeug, mit einem Grundkörper (G, G.1) und einen in diesem integrierten, etwa als Werkzeugeinsatz (1, 1.1, 1.2, 1.3) ausgelegten Temperiereinsatz, der eine Temperieroberfläche und Mittel zum Temperieren, insbesondere zum Abkühlen von zumindest einem Teilbereich der Temperieroberfläche, aufweist, wobei zur Temperierung zumindest eines Teilbereiches der Temperieroberfläche des Temperiereinsatzes in diesem Teilbereich ein Metalleinsatz (M, M.1) in den Grundkörper (G, G.1) integriert ist, wobei durch diesen Metalleinsatz (M, M.1) ganz oder teilweise eine temperierbare Temperieroberfläche bereitgestellt ist, und der Metalleinsatz (M, M.1) eine seine Temperieroberfläche bildende Metallabdeckung (4, 4.1, 4.2) und eine an die Metallabdeckung (4, 4.1, 4.2) rückseitig angeschlossene Wärmesenke umfasst, **dadurch gekennzeichnet, dass** im Kontaktbereich zwischen der Metallabdeckung (4, 4.1, 4.2) und einem rückseitig daran angeschlossenen Metallkörper (3, 3.1, 3.2, 3.3) ein oder mehrere, jeweils durch die Metallabdeckung (4, 4.1, 4.2) und den Metallkörper (3, 3.1, 3.2, 3.3) begrenzte Temperiermittelkanäle (7, 7.1, 7.2, 7.3) angeordnet sind, und dass der Metalleinsatz (M, M.1) mit dem diesen in Bezug auf die Temperieroberfläche einfassenden Metall des Grundkörpers (G, G.1) und die Metallabdeckung (4, 4.1, 4.2) mit dem Metallkörper (3, 3.1, 3.2, 3.3) jeweils durch eine stoffschlüssige Fügeverbindung verbunden sind.

2. Maschinen- oder Werkzeugteil nach Anspruch 1, **dadurch gekennzeichnet, dass** die Metallabdeckung (4, 4.1, 4.2, 4.3) aus demselben Metall wie das den Metalleinsatz (M, M.1) einfassende Material des Grundkörpers (G, G.1) hergestellt ist.

3. Maschinen- oder Werkzeugteil nach Anspruch 1 oder 2, **dadurch gekennzeichnet, dass** die Metallabdeckung oder der Metallkörper (3, 3.1, 3.2, 3.3) wenigstens einen Vorsprung (6) trägt und das jeweils andere Teil eine komplementäre Aufnahme aufweist, in die der Vorsprung (6) für die formschlüssige Ineingriffstellung der beiden Teile eingreift.

4. Maschinen- oder Werkzeugteil nach einem der Ansprüche 1 bis 3, **dadurch gekennzeichnet, dass** der oder die Temperiermittelkanäle (7) durch sich ergänzende Nuten in der Rückseite der Metallabdeckung (4) und in der Frontseite des Metallkörpers (3) gebildet sind.

5. Maschinen- oder Werkzeugteil nach einem der Ansprüche 1 bis 3, **dadurch gekennzeichnet, dass** zur Ausbildung des oder der Temperiermittelkanäle (7.1, 7.2) in lediglich eines der beiden Bauteile - Metallkörper (3.1, 3.2) oder Metallabdeckung (4.1, 4.2) - Nuten eingebracht sind, die zur Komplettierung der Temperiermittelkanäle (7.1, 7.2) durch das andere Bauteil - Metallabdeckung (4.1, 4.2) oder Metallkörper (3.1, 3.2) - verschlossen sind.

6. Maschinen- oder Werkzeugteil nach einem der Ansprüche 1 bis 5, **dadurch gekennzeichnet, dass** die Fügeverbindung zwischen der Metallabdeckung (4, 4.1, 4.2, 4.3) und dem Metallkörper (3, 3.1, 3.2, 3.3) als Elektronenstrahlschweißverbindung) ausgeführt ist, wobei die Breite der zumindest einen durch die Elektronenstrahlschweißverbindung hergestellten Schweißnaht (8, 9; 8.1, 9.1; 8.2, 8.3, 17) an der Temperieroberfläche des Temperiereinsatzes kleiner als 1 mm, insbesondere kleiner als 0,5 mm, ist.

7. Maschinen- oder Werkzeugteil nach einem der Ansprüche 1 bis 6, **dadurch gekennzeichnet, dass** der Werkstoff des Metallkörpers (3, 3.1, 3.2, 3.3) eine zumindest 5-fach höhere Wärmeleitfähigkeit aufweist als der Werkstoff der Metallabdeckung (4, 4.1, 4.2, 4.3).

8. Maschinen- oder Werkzeugteil nach einem der Ansprüche 1 bis 7, **dadurch gekennzeichnet, dass** der Grundkörper (G, G.1) und die Metallabdeckung (4, 4.1, 4.2, 4.3) des Metalleinsatzes (M, M.1) aus einem einer der Stahlsorten 1.2343, 1.2083 oder 1.2738 hergestellt sind.

9. Maschinen- oder Werkzeugteil nach Anspruch 7 oder 8, **dadurch gekennzeichnet, dass** der Metallkörper (3, 3.1, 3.2, 3.3) aus einer berylliumarmen oder berylliumfreien Kupferlegierung hergestellt ist.

10. Maschinen- oder Werkzeugteil nach Anspruch 9, **dadurch gekennzeichnet, dass** der Metallkörper (3, 3.1) aus einer CuCoNi- oder einer CuNiCrSi-Legierung hergestellt ist.

11. Maschinen- oder Werkzeugteil nach einem der Ansprüche 1 bis 10, **dadurch gekennzeichnet, dass** in den aus Metallkörper (3.3) und Metallabdeckung (4.3) gebildeten Metalleinsatz (M.1) ein weiterer Metalleinsatz (18) entsprechend einem oder mehreren der vorstehenden Ansprüche eingesetzt ist.

12. Maschinen- oder Werkzeugteil mit zumindest einem Temperiereinsatz nach einem der Ansprüche 1 bis 11, **dadurch gekennzeichnet, dass** dieses ein Spritz- oder Druckgusswerkzeug, insbesondere zum Herstellen eines Kunststoffteils, ist, wobei die Temperieroberfläche eine Abformoberfläche (10, 10.1, 10.2) des Spritz- oder Druckgusswerkzeuges ist und wobei der Temperiereinsatz als Werkzeugeinsatz (1, 1.1, 1.2, 1.3) ausgeführt ist.

## Claims

1. Machine tool or tool part, such as a plastic moulding tool, with a basic body (G, G1) and a temperature-control insert integrated therein, configured for example as a tool insert (1, 1.1, 1.2, 1.3), which comprises a temperature-control surface and temperature-control means, in particular for cooling at least one sub-region of the temperature-control surface, wherein, for the temperature controlling of at least one sub-region of the temperature-control surface of the temperature-control insert, a metal insert (M, M.1) is integrated into the basic body (G, G.1), wherein, by means of this metal insert (M, M.1), a temperature-controllable temperature-control surface is provided in whole or in part, and the metal insert (M, M.1) comprises a metal cover (4, 4.1, 4.2) forming its temperature-control surface, and a heat sink attached to the rear side of the metal cover (4, 4.1, 4.2), **characterised in that**, arranged in the contact region between the metal cover (4, 4.1, 4.2) and a first metal body (3, 3.1, 3.2, 3.3) connected to the rear side of the metal cover, are one or more temperature-control medium channels (7, 7.1, 7.2, 7.3), each of which is delimited by the metal cover (4, 4.1, 4.2), and the metal body (3, 3.1, 3.2, 3.3), and that the metal insert (M, M.1) is connected to the metal of the basic body (G, G.1) bordering off the insert in relation to the temperature-control surface, and the metal cover (4, 4.1, 4.2) is connected to the metal body (3, 3.1, 3.2, 3.3), in each case by a respective bonded joint connection.

2. Machine tool or tool part according to claim 1, **characterised in that** the metal cover (4, 4.1, 4.2, 4.3) is produced from the same metal as the material of the basic body (G, G.1) bordering off the metal insert (M, M.1)

3. Machine tool or tool part according to claim 1 or 2, **characterised in that** the metal cover or the metal body (3, 3.1, 3.2, 3.3) carries a projection (6) and the respective other part comprises a complementary receiver, into which the projection (6) engages so as to provide the positive fit engagement position of the two parts.

4. Machine tool or tool part according to any one of claims 1 to 3, **characterised in that** the temperature-control medium channel(s) (7) are formed by supplementary grooves in the rear side of the metal cover (4) and in the front side of the metal body (3).

5. Machine tool or tool part according to any one of claims 1 to 3, **characterised in that,** in order to form the temperature-control medium channel(s) (7.1, 7.2), grooves are introduced into only one of the two component parts, the metal body (3.1, 3.2) or metal cover (4.1, 4.2), which, in order to complete the temperature-control means channels (7.1, 7.2), are closed by the other component part, the metal cover (4.1, 4.2) or the metal body (3.1, 3.2).

6. Machine tool or tool part according to any one of claims 1 to 5, **characterised in that** the joint connection between the metal cover (4, 4.1, 4.2, 4.3) and the metal body (3, 3.1, 3.2, 3.3) is formed by an electron beam welding connection, wherein the width of the at least one weld seam (8, 9; 8.1, 9.1; 8.2, 8.3, 17) produced by the electron beam welding connection is smaller than 1 mm at the temperature-control surface of the temperature-control insert, in particular smaller than 0.5 mm.

7. Machine tool or tool part according to any one of claims 1 to 6, **characterised in that** the material of the metal body (3, 3.1, 3.2, 3.3) comprises an at least five times higher thermal conductivity than the material of the metal cover (4, 4.1, 4.2, 4.3).

8. Machine tool or tool part according to any one of claims 1 to 7, **characterised in that** the basic body (G, G.1) and the metal cover (4, 4.1, 4.2, 4.3) of the metal insert (M, M.1) is produced from one of the steel grades 1.2343, 1.2083 or 1.2738.

9. Machine tool or tool part according to claim 7 or 8, **characterised in that** the metal body (3, 3.1, 3.2, 3.3) is made from a copper alloy which is low in beryllium or free of beryllium.

10. Machine tool or tool part according to claim 9, **characterised in that** the metal body (3, 3.1) is produced from a CuCoNi alloy or a CuNiCrSi alloy.

11. Machine tool or tool part according to any one of claims 1 to 10, **characterised in that** a further metal insert (18), corresponding to one or more of the preceding claims, is inserted into the metal insert (M.1) formed from the metal body (3.3) and metal cover (4.3).

12. Machine tool or tool part with at least one temperature-control insert according to any one of claims 1 to 11, **characterised in that** it is an injection-moulded or pressure diecast tool, in particular for the production of a plastic component, wherein the temperature-control surface is a cast surface (10, 10.1, 10.2) of the injection-moulded or pressure diecast tool, and wherein the temperature-control insert is configured as a tool insert (1, 1.1, 1.2, 1.3).

## Revendications

1. Pièce de machine ou d'outil, par exemple un outil de moule mère pour plastiques, comportant un corps de base (G, G.1) et une pièce rapportée de thermorégulation intégrée au précédent, conformée par exemple en tant qu'insert d'outil (1, 1.1, 1.2, 1.3), laquelle présente une surface de thermorégulation et des moyens de thermorégulation, notamment pour refroidir au moins une zone partielle de la surface de thermorégulation ; un insert métallique (M, M.1) étant intégré dans cette zone partielle, dans le corps de base (G, G.1), destiné à réaliser une thermorégulation d'au moins une zone partielle de la surface de thermorégulation de la pièce rapportée de thermorégulation ; une surface de thermorégulation thermorégulable en tout ou partie étant mise à disposition par cet insert métallique (M, M.1), et l'insert métallique (M, M.1) comprenant un recouvrement métallique (4, 4.1, 4.2) formant sa surface de thermorégulation et un dissipateur thermique raccordé au dos du recouvrement métallique (4, 4.1, 4.2), **caractérisé en ce que,** dans la zone de contact entre le recouvrement métallique (4, 4.1, 4.2) et un corps métallique (3, 3.1, 3.2, 3.3) raccordé à son dos, un ou plusieurs canaux de moyens de thermorégulation (7, 7.1, 7.2, 7.3) sont disposés, délimités par le recouvrement métallique (4, 4.1, 4.2) et le corps métallique (3, 3.1, 3.2, 3.3) et **en ce que** l'insert métallique (M, M.1) et le recouvrement métallique (4, 4.1) sont respectivement raccordés par une liaison jointée par complémentarité de matériau, le premier avec le métal du corps de base (G, G.1), qui englobe cet insert métallique par rapport à la surface de thermorégulation, le second, avec le corps métallique (3, 3.1, 3.2, 3.3).

2. Pièce de machine ou d'outil selon la revendication 1, **caractérisée en ce que** le recouvrement métallique (4, 4.1, 4.2, 4.3) est fabriqué dans le même métal que le matériau du corps de base (G, G1) englobant l'insert métallique (M, M1).

3. Pièce de machine ou d'outil selon la revendication 1 ou 2, **caractérisée en ce que** le recouvrement métallique ou le corps métallique (3, 3.1, 3.2, 3.3) supporte au moins une saillie (6) et l'autre pièce correspondante présente un logement complémentaire, dans lequel s'engage la saillie (6) pour réaliser une position d'engagement des deux pièces par complémentarité de forme.

4. Pièce de machine ou d'outil selon l'une des revendications 1 à 3, **caractérisée en ce que** le ou les canaux de moyens de thermorégulation (7) sont conformés par des rainures qui se complètent au dos du recouvrement métallique (4) et sur l'avant du corps métallique (3).

5. Pièce de machine ou d'outil selon l'une des revendications 1 à 3, **caractérisée en ce que** pour configurer le ou les canaux de moyens de thermorégulation (7.1, 7.2) dans seulement l'un des deux composants - corps métallique (3.1, 3.2) ou recouvrement métallique (4.1, 4.2) - des rainures sont réalisées, lesquelles sont refermées par l'autre composant - corps métallique (3.1, 3.2) ou recouvrement métallique (4.1, 4.2) - afin de compléter les canaux de moyens de thermorégulation (7.1, 7.2).

6. Pièce de machine ou d'outil selon l'une des revendications 1 à 5, **caractérisée en ce que** la liaison jointée entre le recouvrement métallique (4, 4.1, 4.2, 4.3) et le corps métallique (3, 3.1, 3.2, 3.3) est réalisée par soudage par faisceau d'électrons, la largeur de l'au moins une soudure de liaison (8, 9 ; 8.1, 9.1 ; 8.2, 8.3, 17) réalisée par soudage par faisceau d'électrons sur la surface de thermorégulation de la pièce rapportée de thermorégulation étant plus petite que 1 mm et notamment plus petite que 0,5 mm.

7. Pièce de machine ou d'outil selon l'une des revendications 1 à 6, **caractérisée en ce que** le matériau du corps métallique (3, 3.1, 3.2, 3.3) présente une conductibilité thermique au moins cinq fois supérieure à celle du matériau du recouvrement métallique (4, 4.1, 4.2, 4.3).

8. Pièce de machine ou d'outil selon l'une des revendications 1 à 7, **caractérisée en ce que** le corps de base (G, G.1) et le recouvrement métallique (4, 4.1, 4.2, 4.3) de l'insert métallique (M, M.1) sont fabriqués à partir de l'un des types d'acier 1.2343, 1.2083 ou 1.2738.

9. Pièce de machine ou d'outil selon la revendication 7 ou 8, **caractérisée en ce que** le corps métallique (3, 3.1, 3.2, 3.3) est fabriqué à partir d'un alliage en cuivre pauvre en béryllium ou exempt de béryllium.

10. Pièce de machine ou d'outil selon la revendication 9, **caractérisée en ce que** le corps métallique (3, 3.1) est fabriqué dans un alliage CuCoNi ou CuNiCrSi.

11. Pièce de machine ou d'outil selon l'une des revendications 1 à 10, **caractérisée en ce que** dans l'insert métallique (M.1) formé par le corps métallique (3.3) et le recouvrement métallique (4.3) est placé un insert métallique (18) supplémentaire conforme à une ou à plusieurs des revendications précédentes.

12. Pièce de machine ou d'outil avec au moins une pièce rapportée de thermorégulation selon l'une des revendications 1 à 11, **caractérisée en ce qu'il** s'agit d'un outil de moulage métallique ou de moulage par injection, notamment pour fabriquer une pièce en plastique, la surface de thermorégulation étant une surface de moulage (10, 10.1, 10.2) de l'outil de moulage métallique ou de moulage par injection et la pièce rapportée de thermorégulation étant réalisée en tant qu'insert d'outil (1, 1.1, 1.2, 1.3).
